(19) Europäisches Patentamt
European Patent Office
Office européen des brevets

(11) Veröffentlichungsnummer: **0 396 959 A1**

(12) # EUROPÄISCHE PATENTANMELDUNG

(21) Anmeldenummer: **90107759.4**

(22) Anmeldetag: **24.04.90**

(51) Int. Cl.5: **C09K 19/42, C09K 19/34, C09K 19/02, G02F 1/135**

(30) Priorität: **09.05.89 DE 3915058**

(43) Veröffentlichungstag der Anmeldung: **14.11.90 Patentblatt 90/46**

(84) Benannte Vertragsstaaten: **DE GB**

(71) Anmelder: **MERCK PATENT GESELLSCHAFT MIT BESCHRÄNKTER HAFTUNG**
**Frankfurter Strasse 250**
**D-6100 Darmstadt(DE)**

(72) Erfinder: **Weber, Georg**
**Wilhelm-Leuschner-Strasse 38**
**D-6106 Erzhausen(DE)**
Erfinder: **Hittich, Reinhard, Dr.**
**Am Kirchberg 11**
**D-6101 Modautal(DE)**
Erfinder: **Klug, Rudolf, Dr.**
**Grünewaldstrasse 25**
**D-8750 Aschaffenburg(DE)**
Erfinder: **Stahl, Klaus-Peter, Dr.**
**Kurt-Schumacher-Strasse 50**
**D-6100 Darmstadt(DE)**
Erfinder: **Reiffenrath, Volker**
**Jahnstrasse 18**
**D-6101 Rossdorf(DE)**

(54) **Flüssigkristallanzeige vom OMI-Typ.**

(57) Die Erfindung betrifft eine Flüssigkristallanzeige vom OMI-Typ bestehend aus einer zwischen zwei mit Elektroden und Oberflächenorientierungen versehenen Platten und Polarisatoren angeordneten hochverdrillten nematischen Flüssigkristallschicht mit positiver dielektrischer Anisotropie, welche zusammengesetzt ist aus

(a) 5 bis 70 Gew.% einer flüssigkristallinen Komponente A bestehend aus einer oder mehreren Verbindungen mit einer dielektrischen Anisotropie von +1,5 oder mehr,

(b) 40 bis 95 Gew.% einer flüssigkristallinen Komponente B bestehend aus drei oder mehr Verbindungen mit einer dielektrischen Anisotropie von unter +1,5, und

(c) einer optisch aktiven Komponente C in einer Menge, daß das Verhältnis zwischen Schichtdicken und natürlicher Ganghöhe des Gesamtgemisches etwa 0,3 bis 0,7 beträgt.

EP 0 396 959 A1

## Flüssigkristallanzeige vom OMI-Typ

Die Erfindung betrifft eine Flüssigkristallanzeige vom OMI-Typ bestehend aus einer zwischen zwei mit Elektroden und Oberflächenorientierungen versehenen Platten und Polarisatoren angeordneten hochverdrillten nematischen Flüssigkristallschicht mit positiver dielektrischer Anisotropie, welche zusammengesetzt ist aus

(a) 5 bis 70 Gew.% einer flüssigkristallinen Komponente A bestehend aus einer oder mehreren Verbindungen mit einer dielektrischen Anisotropie von +1,5 oder mehr,

(b) 40 bis 95 Gew.% einer flüssigkristallinen Komponente B bestehend aus drei oder mehr Verbindungen mit einer dielektrischen Anisotropie von unter +1,5, und

(c) einer optisch aktiven Komponente C in einer Menge, daß das Verhältnis zwischen Schichtdicken und natürlicher Ganghöhe des Gesamtgemisches etwa 0,3 bis 0,7 beträgt, dadurch gekennzeichnet, daß Komponente A eine oder mehrere 2-p-Cyanphenyl-5-n-alkyl-1,3-dioxan-Verbindungen enthält, und Komponente B mehrheitlich auf Estern der Formel I basiert

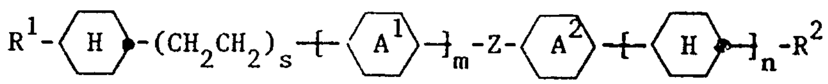
I

worin

$R^1$ und $R^2$ jeweils unabhängig voneinander n-Alkyl oder n-Alkenyl mit 2 bis 7 C-Atomen,

Z -CO-O- oder -O-CO,

s 0 oder 1,

m und n jeweils 0 oder 1,

$A^1$ und $A^2$ jeweils trans-1,4-Cyclohexylen, einer der im Molekül der Formel I vorhandenen Ringe $A^1$ und $A^2$ auch unsubstituiertes oder Fluor substituiertes 1,4-Phenylen bedeutet,

und Komponente B gleichzeitig eine oder mehrere Tolanverbindungen der Formel II enthält,

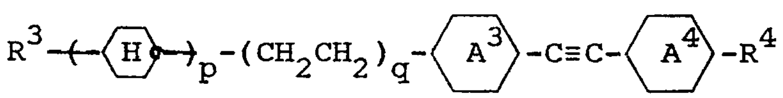
II

worin

$R^3$ n-Alkyl oder n-Alkenyl mit 2 bis 7 C-Atomen,

$R^4$ F, Cl, $CF_3$, $OCF_3$, $OCHF_2$, n-Alkyl oder n-Alkoxy mit jeweils 1 bis 7 C-Atomen oder n-Alkenyl oder n-Alkenyloxy mit 3 bis 7 C-Atomen,

p und q jeweils unabhängig voneinander 0 oder 1,

und

$A^3$ und $A^4$ jeweils unabhängig voneinander unsubstituiertes oder durch Fluor substituiertes 1,4-Phenylen bedeuten.

OMI-Flüssigkristallanzeigen (OMI-LCD's) gemäß des Oberbegriffs sind bekannt, z.B. aus EP 0 260 450 A1; K. Kawasaki et al., SID 87 DIGEST 20.6 pp. 391-394; M. Schadt und F. Leenhouts, Appl. Phys. Lett. 50 (1987), 236. Derartige OMI-LCD's zeichnen sich im Vergleich zu anderen Supertwistanzeigen dadurch aus, daß sie unkritischer in der Schichtdickentoleranz und für voll farbfähige Darstellung geeignet sind.

Von besonderem Interesse sind OMI-LCD's mit sehr hoher Kennliniensteilheit und geringer Winkelabhängigkeit des Kontrastes. Als Maß für die Kennliniensteilheit wird im allgemeinen das Verhältnis $V_{50}/V_{10}$ gewählt ($V_{50}$ = Spannung bei 50 % Kontrast/$V_{10}$ = Spannung bei 10 % Kontrast). Zur Erzielung von hohen Kennliniensteilheiten wurden bisher insbesondere die elastischen Eigenschaften der Flüssigkristallmischung optimiert. Die erzielten Steilheiten und Winkelabhängigkeiten waren jedoch nicht für jede Anwendung ausreichend.

Es besteht somit immer noch ein großer Bedarf nach OMI-LCD's mit sehr hohen Kennliniensteilheiten bei gleichzeitig großem Arbeitstemperaturbereich, kurzen Schaltzeiten, niedriger Schwellenspannung und geringer Winkelabhängigkeit des Kontrastes.

Der Erfindung liegt die Aufgabe zugrunde, OMI-LCD's bereitzustellen, die die oben angegebenen Nachteile nicht oder nur in geringerem Maße und gleichzeitig insbesondere sehr hohe Kennliniensteilheiten

aufweisen.

Es wurde nun gefunden, daß diese Aufgabe gelöst werden kann, wenn man in diesen OMI-LCD's nematische Flüssigkristallmischungen mit positiver dielektrischer Anisotropie verwendet, die zusammengesetzt sind aus

(a) 5 bis 70 Gew.% einer flüssigkristallinen Komponente A bestehend aus einer oder mehreren Verbindungen mit einer dielektrischen Anisotropie von +1,5 oder mehr,

(b) 40 bis 95 Gew.% einer flüssigkristallinen Komponente B bestehend aus drei oder mehr Verbindungen mit einer dielektrischen Anisotropie von unter +1,5, und

(c) einer optisch aktiven Komponente C in einer Menge, daß das Verhältnis zwischen Schichtdicken und natürlicher Ganghöhe des Gesamtgemisches etwa 0,3 bis 0,7 beträgt.

Gegenstand der Erfindung ist somit eine Flüssigkristallanzeige vom OMI-Typ bestehend aus einer zwischen zwei mit Elektroden und Oberflächenorientierungen versehenen Platten und Polarisatoren angeordneten hochverdrillten nematischen Flüssigkristallschicht mit positiver dielektrischer Anisotropie, welche zusammengesetzt ist aus

(a) 5 bis 70 Gew.% einer flüssigkristallinen Komponente A bestehend aus einer oder mehreren Verbindungen mit einer dielektrischen Anisotropie von +1,5 oder mehr,

(b) 40 bis 95 Gew.% einer flüssigkristallinen Komponente B bestehend aus drei oder mehr Verbindungen mit einer dielektrischen Anisotropie von unter +1,5, und

(c) einer optisch aktiven Komponente C in einer Menge, daß das Verhältnis zwischen Schichtdicken und natürlicher Ganghöhe des Gesamtgemisches etwa 0,3 bis 0,7 beträgt, dadurch gekennzeichnet, daß Komponente A eine oder mehrere 2-p-Cyanphenyl-5-n-alkyl-1,3-dioxan-Verbindungen enthält, und Komponente B mehrheitlich auf Estern der Formel I basiert

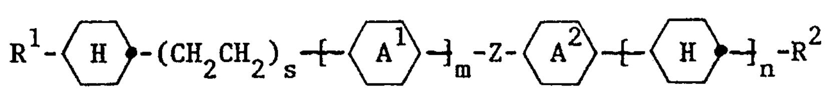 I

worin

$R^1$ und $R^2$ jeweils unabhängig voneinander n-Alkyl oder n-Alkenyl mit 2 bis 7 C-Atomen,

Z -CO-O- oder -O-CO,

s 0 oder 1,

m und n jeweils 0 oder 1,

$A^1$ und $A^2$ jeweils trans-1,4-Cyclohexylen, einer der im Molekül der Formel I vorhandenen Ringe $A^1$ und $A^2$ auch unsubstituiertes oder Fluor substituiertes 1,4-Phenylen bedeutet,

und Komponente B gleichzeitig eine oder mehrere Tolanverbindungen der Formel II enthält,

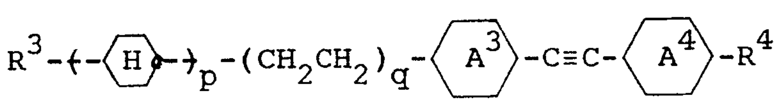 II

worin

$R^3$ n-Alkyl oder n-Alkenyl mit 2 bis 7 C-Atomen, $R^4$ F, Cl, $CF_3$, $OCF_3$, $OCHF_2$, n-Alkyl oder n-Alkoxy mit jeweils 1 bis 7 C-Atomen oder n-Alkenyl oder n-Alkenyloxy mit 3 bis 7 C-Atomen,

p und q jeweils unabhängig voneinander 0 oder 1, und

$A^3$ und $A^4$ jeweils unabhängig voneinander unsubstituiertes oder durch Fluor substituiertes 1,4-Phenylen bedeuten.

Gegenstand der Erfindung sind ferner entsprechende Anzeigen, die folgenden Bedingungen genügen:

- Komponente B enthält einen oder mehrere Ester der Formel Ia

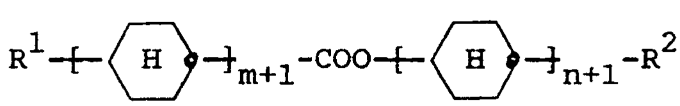 Ia

wobei m + n vorzugsweise 0 oder 1 ist.

- Komponente B enthält einen oder mehrere Ester der Formel Ib

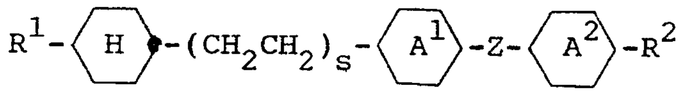 Ib

worin einer der Ringe $A^1$ und $A^2$ trans-1,4-Cyclohexylen und der andere Ring 1,4-Phenylen bedeutet.

- Komponente B enthält einen oder mehrere Ester der Formel Ib1

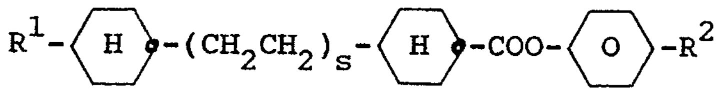 Ib1

- Der Flüssigkristall enthält 40 bis 80 Gew.% an Estern der Formel I.
- Der Flüssigkristall enthält 3 bis 30 Gew.% an Tolanverbindungen der Formel II.
- Der Anteil der 2-p-Cyanphenyl-5-n-alkyl-1,3-dioxan-Verbindungen ist 5 bis 50 Gew.%.

Gegenstand der Erfindung sind schließlich auch entsprechende Flüssigkristallmischungen zur Verwendung in OMI-LCD's.

Die erfindungsgemäßen Flüssigkristallmischungen ermöglichen es bei niedrigen Viskositäten gleichzeitig einen niedrigen Wert für $\Delta\epsilon/\epsilon_\perp$ zu erreichen, wodurch in OMI-LCD's hervorragende Steilheiten der elektrooptischen Kennlinie erzielt werden können. Die erfindungsgemäßen Flüssigkristallmischungen haben vorzugsweise ein $\epsilon_\perp \geqq 5$, insbesondere $\epsilon_\perp \geqq 7$. $\Delta\epsilon/\epsilon_\perp$ ist vorzugsweise $\leqq 1{,}5$, insbesondere $\leqq 1{,}3$. $\Delta\epsilon/\epsilon_\perp$ liegt vorzugsweise im Bereich von 0,5 bis 1,3. Die Viskosität bei 20 °C ist vorzugsweise $\leqq$ 25 mPa.s. Der nematische Phasenbereich ist vorzugsweise mindestens 70, insbesondere mindestens 80°. Vorzugsweise erstreckt sich dieser Bereich mindestens von -20° bis +70°.

Der angegebene Bereich für $\Delta\epsilon/\epsilon_\perp$ wird auch von Mischungen aus dem Stand der Technik berührt, allerdings nur bei deutlich kleinerem $\Delta\epsilon$ bzw. bei höheren Schwellenspannungen. Der entscheidende Vorteil der erfindungsgemäßen Mischungen liegt in der Größe von $\epsilon_\perp$.

Bekannt waren auch Mischungen mit $\epsilon_\perp \sim 5$; diese zeigen jedoch entweder deutlich schlechtere Klärpunkte oder höhere Viskositätswerte.

Die Klärpunkte der erfindungsgemäßen Mischungen sind vorzugsweise $\geqq$ 90°, insbesondere $\geqq$ 100°. Die Viskositäten bei 20° sind vorzugsweise < 30 mPa.s insbesondere < 25 mPa.s.

Die einzelnen Verbindungen, die in den erfindungsgemäßen OMI-LCD's verwendet werden können, sind entweder bekannt, oder sie können analog zu den bekannten Verbindungen hergestellt werden.

Die Zusammensetzung der Komponente A ist an sich nicht kritisch, d.h. der Fachmann kann Art und Menge dieser Komponente beliebig aus den in großer Zahl zur Verfügung stehende Verbindungen festlegen unter Beachtung der erforderlichen Werte für $\Delta\epsilon$. Vorzugsweise werden jedoch neben den Dioxanverbindungen oder anstelle derselben Verbindungen aus der folgenden Gruppe ausgewählt:

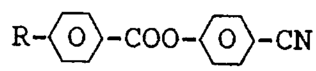

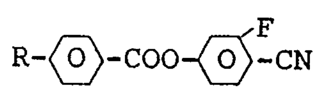

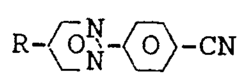

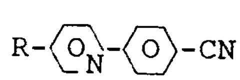

worin R Alkyl mit 2 bis 7 C-Atomen bedeutet.

Komponente B enthält vorzugsweise Verbindungen ausgewählt aus der Gruppe:

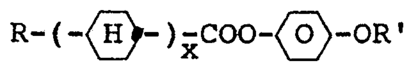

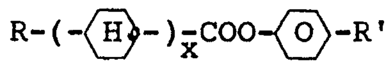

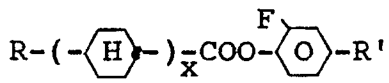

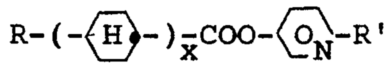

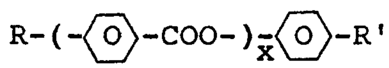

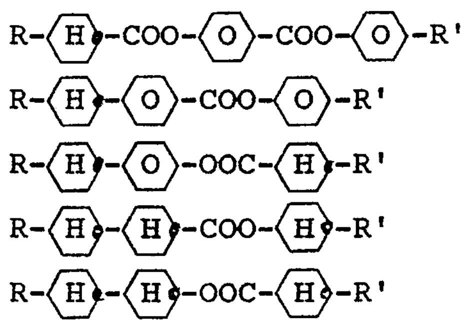

worin x 1 oder 2, und R und R′ jeweils Alkyl mit 1 bis 7 C-Atomen bedeuten.

Der Aufbau der erfindungsgemäßen OMI-LCD's entspricht der für derartige Anzeigen üblichen Bauweise. Dabei ist der Begriff der üblichen Bauweise hier weit gefaßt und umfaßt auch alle Abwandlungen und Modifikationen der OMI-LCD's.

Ein wesentlicher Unterschied der erfindungsgemäßen OMI-LCD's zu den bisher üblichen besteht jedoch in der Wahl der Flüssigkristallparameter der Flüssigkristallschicht.

In den erfindungsgemäßen OMI-LCD's werden flüssigkristalline Phasen eingesetzt, bei denen die Flüssigkristallparameter $\Delta\epsilon$ und $\Delta\epsilon/\epsilon_{\perp}$ so gewählt werden, daß eine möglichst steile elektrooptische Kennlinie gewährleistet ist, zusammen mit einem maximalen Kontrast und einer minimalen Blickwinkelabhängigkeit bei gleichzeitigem nematischen Phasenbereich von mindestens 60° und einer Viskosität von 30 mPa.s oder darunter.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern, ohne sie zu begrenzen.

Es bedeutet:

S-N Phasenübergangs-Temperatur smektisch-nematisch,

Klp. Klärpunkt,

Visk. Viskosität bei 20° (m Pa.s),

$\Delta\epsilon$ Dielektrische Anisotropie bei 20° C (1kHz),

$V_{50}/V_{10}$ Steilheit der Kennlinie einer SFK-Anzeige bei 20°, d/P (Schichtdicke/Ganghöhe) ~ 0,35, d.$\Delta$n = 1,06, Verdrillungswinkel 180°, Anstellwinkel ~ 1°.

Vor und nachstehend sind alle Temperaturen in °C angegeben. Die Prozentzahlen sind Gewichtsprozente.

Beispiel 1

Ein OMI-LCD mit folgenden Parametern:
Verdrillungswinkel 180°
Anstellwinkel 1°
d/p (Schichtdicke/Ganghöhe) 0.35
d.Δn 0,51
enthaltend eine Flüssigkristallmischung mit folgenden Parametern:
Klärpunkt 92°
Δn 0,0998 (589 nm)
Viskosität 26 mPa.s
Δε +6,2
ε⊥ 5,1
und bestehend aus
5 % 2-p-Cyanphenyl-5-ethyl-1,3-dioxan
9 % 2-p-Cyanphenyl-5-propyl-1,3-dioxan
12 % 2-p-Cyanphenyl-5-butyl-1,3-dioxan
5 % trans-1-p-Methoxyphenyl-4-propylcyclohexan,
17 % trans-4-Propylcyclohexancarbonsäure-(trans-4-propylcyclohexylester),
10 % trans-4-Propylcyclohexancarbonsäure-(trans-4-pentylcyclohexylester),
5 % trans-4-Butylcyclohexancarbonsäure-(p-trans-4-propylcyclohexylphenylester),
5 % trans-4-Pentylcyclohexancarbonsäure-(p-trans-4-propylcyclohexylphenylester),
6 % trans-(trans-4-Propylcyclohexyl)-cyclohexancarbonsäure-(p-propylphenylester),
6 % trans-(trans-4-Propylcyclohexyl)-cyclohexancarbonsäure-(p-pentylphenylester),
6 % trans-(trans-4-Butylcyclohexyl)-cyclohexancarbonsäure-(p-propylphenylester),
5 % trans-(trans-4-Butylcyclohexyl)-cyclohexancarbonsäure-(p-pentylphenylester),
3 % 4-(trans-4-Propylcyclohexyl)-4′-methoxy-tolan,
3 % 4-(trans-4-Propylcyclohexyl)-4′-ethoxy-tolan und
3 % 4-(trans-4-Propylcyclohexyl)-4′-propoxy-tolan
zeigt eine hervorragende Kennliniensteilheit $V_{50}/V_{10}$ von 6,5 % bei $V_{10}$ = 2,0 Volt und eine sehr geringe Blickwinkelabhängigkeit des Kontrastes.

Beispiel 2

Ein OMI-LCD enthaltend eine Flüssigkristallmischung mit folgenden Parametern:
Klärpunkt 87°
Δn 0,102 (589 nm)
Viskosität 21 mPa.s
Δε +7,1
ε⊥ 5,1
und bestehend aus
5 % 2-p-Cyanphenyl-5-ethyl-1,3-dioxan,
5 % 2-p-Cyanphenyl-5-propyl- 1,3-dioxan,
6 % 2-p-Cyanphenyl-5-butyl-1,3-dioxan,
5 % trans-1-p-Methoxyphenyl-5-propylcyclohexan, 20 % trans-4-Propylcyclohexancarbonsäure-(trans-4-propylcyclohexylester),
10 % trans-4-Propylcyclohexancarbonsäure-(trans-4-pentylcyclohexylester),
5 % trans-4-Butylcyclohexancarbonsäure-(p-trans-4-propylcyclohexyl-phenylester),
5 % trans-4-Pentylcyclohexancarbonsäure-(p-trans-4-propylcyclohexyl-phenylester),
5 % trans-4-(trans-4-Propylcyclohexyl)-cyclohexancarbonsäure-(p-propylphenylester),
5 % trans-4-(trans-4-Propylcyclohexyl)-cyclohexancarbonsäure-(p-pentylphenylester),
5 % trans-4-(trans-4-Butylcyclohexyl)-cyclohexancarbonsäure-(p-propylphenylester),
5 % trans-4-(trans-4-Butylcyclohexyl)-cyclohexancarbonsäure(p-pentylphenylester,
5 % 4-Fluor-4′-butyloxytolan,
5 % 4-Fluor-4′-heptyloxytolan,
3 % 4-(trans-4-Propylcyclohexyl)-4′-methoxy-tolan,
3 % 4-(trans-4-Propylcyclohexyl)-4′-ethoxy-tolan und

3 % 4-(trans-4-Propylcyclohexyl)-4′-propoxy-tolan
zeigt eine hervorragende optische Performance und gutes Tieftemperaturverhalten.

## Ansprüche

1. Flüssigkristallanzeige vom OMI-Typ bestehend aus einer zwischen zwei mit Elektroden und Oberflächenorientierungen versehenen Platten und Polarisatoren angeordneten hochverdrillten nematischen Flüssigkristallschicht mit positiver dielektrischer Anisotropie, welche zusammengesetzt ist aus
(a) 5 bis 70 Gew.% einer flüssigkristallinen Komponente A bestehend aus einer oder mehreren Verbindungen mit einer dielektrischen Anisotropie von +1,5 oder mehr,
(b) 40 bis 95 Gew.% einer flüssigkristallinen Komponente B bestehend aus drei oder mehr Verbindungen mit einer dielektrischen Anisotropie von unter +1,5, und
(c) einer optisch aktiven Komponente C in einer Menge, daß das Verhältnis zwischen Schichtdicken und natürlicher Ganghöhe des Gesamtgemisches etwa 0,3 bis 0,7 beträgt,
dadurch gekennzeichnet, daß Komponente A eine oder mehrere 2-p-Cyanphenyl-5-n-alkyl-1,3-dioxan-Verbindungen enthält, und Komponente B mehrheitlich auf Estern oder Formel I basiert

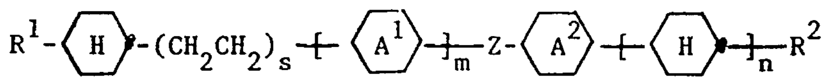 I

worin
$R^1$ und $R^2$ jeweils unabhängig voneinander n-Alkyl oder n-Alkenyl mit 2 bis 7 C-Atomen,
Z -CO-O- oder -O-CO,
s 0 oder 1,
m und n jeweils 0 oder 1,
$A^1$ und $A^2$ jeweils trans-1,4-Cyclohexylen, einer der im Molekül der Formel I vorhandenen Ringe $A^1$ und $A^2$ auch unsubstituiertes oder Fluor substituiertes 1,4-Phenylen bedeutet,
und Komponente B gleichzeitig eine oder mehrere Tolanverbindungen der Formel II entält,

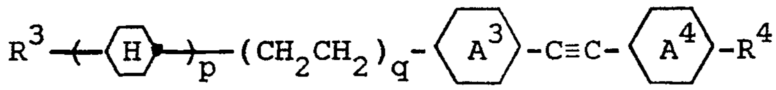 II

worin
$R^3$ n-Alkyl oder n-Alkenyl mit 2 bis 7 C-Atomen,
$R^4$ F, Cl, $CF_3$, $OCF_3$, $OCHF_2$, n-Alkyl oder n-Alkoxy mit jeweils 1 bis 7 C-Atomen oder n-Alkenyl oder n-Alkenyloxy mit 3 bis 7 C-Atomen,
p und q jeweils unabhängig voneinander 0 oder 1,
und
$A^3$ und $A^4$ jeweils unabhängig voneinander unsubstituiertes oder durch Fluor substituiertes 1,4-Phenylen bedeuten.

2. Anzeige nach Anspruch 1, dadurch gekennzeichnet, daß Komponente B einen oder mehrere Ester der Formel Ia

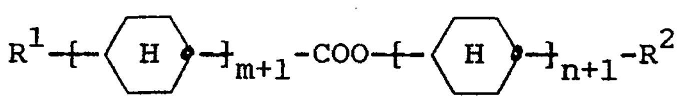 Ia

enthält.

3. Anzeige nach Anspruch 2, dadurch gekennzeichnet, daß $m = n = 0$.

4. Anzeige nach Anspruch 2, dadurch gekennzeichnet, daß $m + n = 1$.

5. Anzeige nach mindestens einem der Ansprüche 1 bis 4, dadurch gekennzeichnet, daß Komponente B einen oder mehrere Ester der Formel Ib enthält,

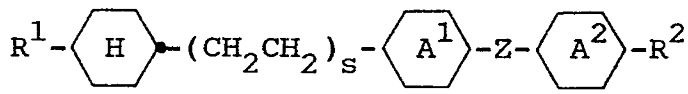

Ib

worin einer der Ringe A' und $A^2$ trans-1,4-Cyclohexylen und der andere Ring 1,4-Phenylen bedeutet.

6. Anzeige nach Anspruch 5, dadurch gekennzeichnet, daß Komponente B einen oder mehrere Ester der Formel Ib1

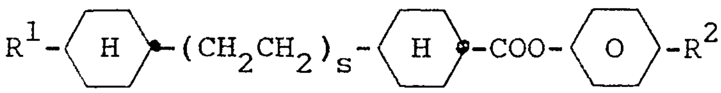

Ib1

enthält.

7. Anzeige nach Anspruch 1, dadurch gekennezeichnet, daß der Flüssigkristall 40 bis 80 Gew.% an Estern der Formel I enthält.

8. Anzeige nach mindestens einem der Ansprüche 1 und 7, dadurch gekennzeichnet, daß der Flüssigkristall 3 bis 30 Gew.% an Tolanverbindungen der Formel II enthält.

9. Anzeige nach mindestens einem der Ansprüche 1 bis 8, dadurch gekennzeichnet, daß der Anteil der 2-p-Cyanphenyl-5-n-alkyl-1,3-dioxan-Verbindungen 5 bis 50 Gew.% ist.

10. Flüssigkristalline Mischung der in mindestens einem der Ansprüche 1 bis 9 definierten Zusammensetzung.

Europäisches Patentamt

# EUROPÄISCHER RECHERCHENBERICHT

Nummer der Anmeldung

EP 90107759.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| A | WO - A1 - 86/05 799 (MERCK PATEN GESMBH) * Ansprüche; Beispiele * -- | 1,10 | C 09 K 19/42<br>C 09 K 19/34<br>C 09 K 19/02<br>G 02 F 1/135 |
| A | US - A - 4 670 182 (Y.FUJITA et al.) * Ansprüche; Tabelle 1 * -- | 1,10 | |
| D,A | EP - A1 - 0 260 450 (HOFFMANN-LA ROCHE) * Gesamt * -- | 1 | |
| A | EP - A2 - 0 261 614 (HOFFMANN-LA ROCHE) * Ansprüche; Beispiele * ---- | 1,10 | |

RECHERCHIERTE SACHGEBIETE (Int Cl 5)

C 09 K 19/00
G 02 F 1/00

Der vorliegende Recherchenbericht wurde für alle Patentansprüche erstellt.

| Recherchenort | Abschlußdatum der Recherche | Prüfer |
|---|---|---|
| WIEN | 02-08-1990 | HOFBAUER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument